# EUROPEAN PATENT SPECIFICATION

(11) **EP 2 352 252 B1**
(45) Date of publication and mention of the grant of the patent: **15.03.2017**
(21) Application number: 09821528.8
(22) Date of filing: 24.07.2009
(51) Int. Cl.: H04L 9/08, H04L 9/32, H04B 5/00, H04W 99/00

(54) **KEY DISTRIBUTION METHOD AND SYSTEM**
SCHLÜSSELVERTEILUNGSVERFAHREN UND -SYSTEM
PROCÉDÉ ET SYSTÈME DE DISTRIBUTION DE CLÉS

(30) Priority: 23.10.2008 CN 200810172967
(43) Date of publication of application: 03.08.2011
(73) Proprietor: ZTE Corporation, Shenzhen, Guangdong 518057 (CN)
(72) Inventor: MA, Jingwang, Guangdong 518057 (CN); YU, Wantao, Guangdong 518057 (CN); JIA, Qian, Guangdong 518057 (CN)
(74) Representative: Office Freylinger
(86) International application number: PCT/CN2009/072902
(87) International publication number: WO 2010/045807

(56) References cited:
- CN-A- 1 977 537
- US-A1- 2008 005 567
- US-B1- 6 402 028
- 'GlobalPlatform Card Specification Version 2.2' GLOBALPLATFORM, THE STANDARD FOR SMART CARD INFRASTRUCTURES, [Online] March 2006, pages 17,18,22,23,57 - 66,311, XP007908232 Retrieved from the Internet: <URL:www.globalplatform.org/specificationsc ard.asp> [retrieved on 2009-09-28]
- 'Dynamic management of multi-application secure elements' STOLPAN NFC MOBILE SERVICES STANDARDS CONSORTIUM 11 August 2008, XP008147132

## Description

### Filed of the Invention

The present invention relates to communication field, in particular to a key distribution method and system.

### Background of the Invention

In the related art, Near Field Communication (NFC) is short-distance wireless communication technology working in 13.56MHz, evolving from convergence of Radio Frequency Identification (RFID) technology and interconnection technology. A mobile communication terminal such as a mobile phone can achieve the simulation of non-contact IC card by integrating NFC technology for the application to the field related to electronic payment. Further, the realization of the solution on a mobile communication terminal requires addition of NFC analog front-end chip and NFC antenna on the terminal, and usage of smart card which supports electronic payment.

With development of more than ten years, IC card (especially non-contact IC card) has been widely used in the fields such as public transport, access control, and electronic micropayment. Meanwhile, after the rapid development of more than twenty years, mobile phones are popularized, and bring forth great convenience to people's work and life. As the function of mobile phones becomes more and more powerful, mobile phones are equipped with the non-contact IC card technology and are used in the electronic payment field, which expands the application field of mobile phones, and brings more convenience to people's life. Thus, the prospect of the application of mobile phones is very promising.

In the related art, in order to achieve mobile electronic payment based on the NFC technology, it is required to establish a mobile terminal electronic payment system, and to realize management on mobile terminal electronic payment through the system, wherein the mobile terminal electronic payment system includes: issuance of a smart card, download, installation, and individuation of electronic payment application, and usage of related technologies and management strategies to achieve the security of electronic payment.

Security domains are representatives of off-card entities (including card issuers and application providers) on a card, and include cryptographic keys supporting operation of Secure Channel Protocol and card content management. The security domains are responsible for their own key management, which ensures the coexistence of application and data from different application providers on the same card. When a key of a security domain uses non-symmetric key system, the keys and the certificate in the security domain need to include: a public key and a private key of the security domain, a certificate of the security domain, and a Trust Point's public key for verifying certificates of off-card entities.

The security domain of an application provider on the smart card is a supplementary security domain. Before the electronic payment application of the application provider is downloaded to be installed to a smart card, it is required to firstly use an issuer security domain of the smart card owned by a card issuer to create a supplementary security domain of the application provider, and then set a key for the supplementary security domain.

Since the key of a security domain is confidential data, reliable and safe methods and technologies need to be used to import the related key and certificate into a supplementary security domain, to achieve safe distribution of the key in the supplementary security domain, wherein, the establishment of the supplementary security domain needs to be established by an issuer security domain of a smart card with an instruction from a card issuer management platform, and after the supplementary security domain has been created, the initial keys of the supplementary security domain can be set and distributed by the card issuer management platform.

After the supplementary security domain has been established, the card issuer management platform can inform a supplementary security domain card of generating a public/private key pair, then the supplementary security domain returns the generated keys to the card issuer management platform, and the card issuer management platform transmits the keys generated by the supplementary security domain to the application provider management platform. The application provider management platform generates a supplementary security domain certificate according to the public key of the supplementary security domain, and then the card issuer management platform transmits the supplementary security domain certificate to the supplementary security domain through the issuer security domain, thereby, the key distribution of the supplementary security domain is completed.

In the above circumstances, the card issuer management platform can obtain the transmitted key data of the security domain when it is in charge of the transmission of the key data, such that it can perform operations on the supplementary security domain using the obtained key, which can threat the security of electronic payment application of the application provider. Therefore, there is an urgent need for a technical solution to solve the problem of insecurity in key distribution of the supplementary security domain.

US 2008/005567, and US 6402028 provide respective technical solutions; however, the above mentioned problem still remains unsolved.

### Summary of the Invention

The present invention is provided in view of the problem of insecurity in key distribution of the supplementary security domain caused by that the card issuer management platform can obtain the transmitted key data of the security domain when in charge of the transmission of the key data in the related art. Thus, the main object of the present invention is to provide a key distribution method and system to solve the problem existing in the related art as mentioned above.

According to one aspect of the present invention, a key distribution method is provided. The key distribution method according to the present invention comprises: a card issuer management platform informing a supplementary security domain corresponding to an application provider of generating in a smart card a public/private key pair including a public key and a private key, receiving the public key returned from the supplementary security domain, importing a Trust Point's public key for external authentication into the supplementary security domain, and transmitting the information of the supplementary security domain and the public key to an application provider management platform; the application provider management platform receiving the information of the supplementary security domain and the public key from the card issuer management platform, and selecting the supplementary security domain of the smart card through a service terminal according to the information of the supplementary security domain and the public key; the application provider management platform informing the supplementary security domain of regenerating a public key and a private key, generating a supplementary security domain certificate according to the regenerated public key which is returned from the supplementary security domain, and achieving key distribution to the supplementary security domain by transmitting the supplementary security domain certificate to the supplementary security domain.

Preferably, the particular processing of the card issuer management platform informing the supplementary security domain of generating the public/private key pair is: the application provider management platform judging, through the service terminal of the application provider, whether the supplementary security domain corresponding to the application provider exists in the smart card; if it is determined to be yes, the supplementary security domain of the application provider has existed in the smart card, then security domain creation and key distribution no longer being performed; if no, the application provider management platform creating, through the card issuer management platform, the supplementary security domain in the smart card, and informing the created supplementary security domain of generating the public/private key pair.

Preferably, the specific processing of the application provider management platform creating a supplementary security domain in the smart card through the card issuer management platform is: the card issuer management platform communicating with the smart card through the application provider management platform, selecting an issuer security domain of the smart card and establishing a secure channel with the issuer security domain; the card issuer management platform informing, through the secure channel, the issuer security domain of creating the supplementary security domain corresponding to the application provider; the issuer security domain creating the supplementary security domain in the smart card.

Preferably, after the application provider management platform receiving the information of the supplementary security domain and the public key transmitted by the card issuer management platform, the method further comprises: the application provider management platform recording in its database the information of the supplementary security domain.

Preferably, after the application provider management platform makes a selection of the supplementary security domain according to the information of the supplementary security domain and the public key, the method further comprises: the application provider management platform establishing a secure channel with the supplementary security domain.

Preferably, after the application provider management platform sends the supplementary security domain certificate to the supplementary security domain, the method further comprises: the supplementary security domain writing the supplementary security domain certificate into the supplementary security domain.

According to another aspect of the present invention, a key distribution system is provided.

The key distribution system according to the present invention comprises: a card issuer management platform which comprises: a card issuer management platform which comprises: a creating module, configured to create a supplementary security domain corresponding to an application provider in a smart card; a first informing module, configured to inform the supplementary security domain of generating in the smart card a public/private key pair including a public key and a private key; a first receiving module, configured to receive the public key returned from the supplementary security domain; an importing module, configured to import a Trust Point's public key for external authentication into the supplementary security domain; a first transmitting module, configured to transmit the information of the supplementary security domain and the public key to an application provider management platform after performing the importing step; the application provider management platform which comprises: a second receiving module, configured to receive the information of the supplementary security domain and the public key from the card issuer management platform; a selecting module, configured to select the supplementary security domain of the smart card by a service terminal according to the information of the supplementary security domain and the public key; a second informing module, configured to inform the supplementary security domain of regenerating a public key and a private key; a generating module, configured to generate a supplementary security domain certificate according to the regenerated public key which is returned from the supplementary security domain; a second transmitting module, configured to transmit the supplementary security domain certificate to the supplementary security domain through a service terminal to achieve the supplementary security domain key distribution; the service terminal, configured to establish communications with the smart card through a reading and writing device, and to establish a connection between the smart card and the application provider management platform; the smart card, located in a mobile terminal, and comprising the supplementary security domain, wherein the supplementary security domain, configured to generate a public/private key pair, and to return the public key to the card issuer management platform through the service terminal, to regenerate a public key and a private key in the case that the application provider management platform informing the supplementary security domain of regenerating a public key and a private key, to return the regenerated public key to the application provider management platform, and to receive the supplementary security domain certificate sent by the application provider management platform.

Preferably, the application provider management platform further includes: a judging module, configured to judge, through the service terminal of the application provider, whether the supplementary security domain corresponding to the application provider exists in the smart card; a calling module, configured to call the creating module to create the supplementary security domain in the smart card through the card issuer management platform if the judging module judges that the supplementary security domain corresponding to the application provider does not exist in the smart card.

Preferably, the application provider management platform further includes: a recording module, configured to record in its database the information of the supplementary security domain after receiving the information of the supplementary security domain and the public key sent by the card issuer management platform.

Preferably, the application provider management platform further includes: a secure channel establishing module, configured to establish a secure channel with the supplementary security domain after selecting the supplementary security domain of the smart card through the service terminal according to the information of the supplementary security domain and the public key.

By means of the technical solution of the present invention, the supplementary security domain keys are distributed through the service terminal of the application provider, which solves the problem of insecurity in key distribution of the supplementary security domain caused by that the card issuer management platform can obtain the transmitted key data of the security domain when in charge of the transmission of the key data in the related art, and can avoid other possible security threats and attack. Thereby, security in supplementary security domain key distribution of the application provider is enhanced.

Other features and advantages of the present invention will be set forth in the following description, and, partially become obvious in the Description, or be understood through the embodiments of the present invention. The object of the present invention and other advantages could be achieved and obtained through the structure specified in the Description, the Claims, and the accompanying drawings.

### Brief Description of the Accompanying Drawings

The drawings herein are used to provide further understanding of the present invention and form a part of the specification, which are used to explain the present invention with embodiments of the present invention rather than unduly limit the present invention. In the accompanying drawings:
Figure 1 is a block diagram of the key distribution system according to an embodiment of the present invention;
Figure 2 is a flowchart of the key distribution method according to an embodiment of the present invention;
Figure 3 is a signaling flowchart of the specific processing procedure of the key distribution method according to an embodiment of the present invention.

### Detailed Description of the Preferred Embodiments

### Brief description about functions

In the related art, the card issuer management platform can obtain the transmitted key data of the security domain when in charge of the transmission of the key data, which will result in insecurity in key distribution of the supplementary security domain of the application provider. Thus, the present invention provides a key distribution method and system, including: a card issuer management platform informs a supplementary security domain corresponding to an application provider of generating in a smart card a public/private key pair including a public key and a private key, receives the public key returned from the supplementary security domain, imports one public key for trust point for external authentication into the supplementary security domain, and sends the information of the supplementary security domain and the public key to an application provider management platform; the application provider management platform receives the information of the supplementary security domain and the public key from the card issuer management platform, and selects the supplementary security domain of the smart card by a service terminal according to the information of the supplementary security domain and the public key; the application provider management platform informs the supplementary security domain of regenerating a public key and a private key, generates a supplementary security domain certificate according to the regenerated public key which is returned from the supplementary security domain, and achieves the supplementary security domain key distribution by sending the supplementary security domain certificate to the supplementary security domain.

Preferable embodiments of the present invention will be described hereinafter in conjunction with the accompanying drawings, and it shall be understood that the preferable embodiments herein are just used to describe and explain the present invention and shall not be construed as limitations on the present invention. It shall be explained that the embodiments of the present invention and the features of the embodiments can be combined with each other if there is no conflict.

### System embodiments

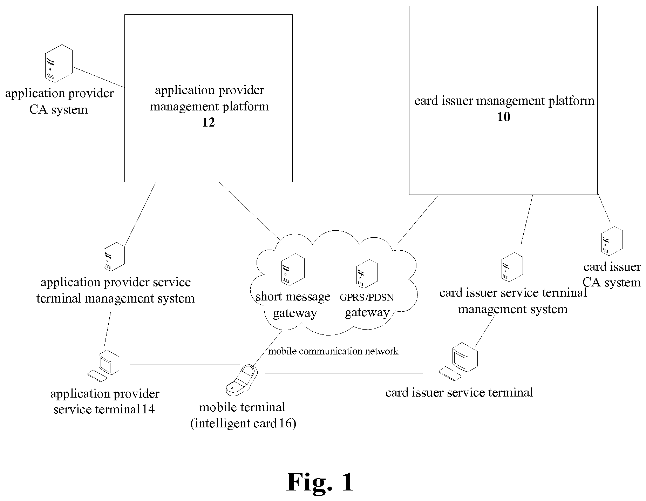

According to an embodiment of the present invention, a key distribution system is provided. Figure 1 is a block diagram of the key distribution system according to an embodiment of the present invention. At present, a mobile terminal short-distance electronic payment system employs a multi-application framework of Global Platform specification as a service framework, multiple applications can be installed on a smart card supporting Global Platform specification, and the smart card is separated into a number of independent security domains, so as to ensure isolation and independence between the multiple applications. Each application provider manages its own security domain, application, application data, and so on. The smart card supporting Global Platform specification indicates an IC chip or smart card in accordance with Global Platform Card Specification V2.1.1 or V2.2 set by Global Platform (GP) organization, and, in physical form, can be a SIM/USIM card, a pluggable intelligent memory card, or an IC chip integrated on the mobile terminal.

The framework of the mobile terminal electronic payment system based on Near Field Communication is required to meet the Global Platform Card Specification V2.1.1/V2.2 specification. If the system supports GP2.1.1 specification, the Security Channel Protocol needs to be based on symmetric key (Security Channel Protocol 02, referred to as SCP02); and if the system supports GP2.2 specification, the Security Channel Protocol needs to support SCP02 and be based on asymmetric key (Security Channel Protocol 10, referred to as SCP10). Moreover, card issuers and application providers can make a selection according to the requirements of security strategies.

In terms of service architecture, the mobile terminal short-distance payment system may include card issuers, application providers, and users, wherein:
card issuer: responsible for card issuance and management, with a card management system, a key management system, and a certificate management system, wherein the certificate management system is used only under the condition of supporting asymmetric key. In addition, the card issuer manages the resources, life cycle, key, and certificate of the card, creates security domains of other application providers, and interacts with other security domains in application data. The card issuer may also have an application management system responsible for provision and management functions of the applications of the card issuer or of the applications hosted by the card issuer. The card issuer may have a service terminal management system and a service terminal, and provide services to users through the service terminal. To support the management on the application provider, the card issuer can have an application provider management system to record information concerning the application provider, and to define service authorities of the application provider.

Application provider: responsible for the provision and management functions of electronic payment applications, with an application management system, a key management system, and a certificate management system, wherein the certificate management system is used only under the condition of supporting asymmetric key. In addition, the application provider provides a variety of service applications, manages the security domain corresponding to the application provider on the card, controls the application key, certificate, and data of the security domain, and provides secure download function of the applications. The application providers can be operators, banks, bus companies, retailers, and so on. In addition, the application provider may have a service terminal management system and a service terminal, and provide services to users through the service terminal.

User: responsible for download, installation and use of electronic payment applications. Through interaction with the card issuer or the application provider, the user operates the mobile terminal and the card, downloads and installs new applications in security domains, and uses various service applications provided.

The mobile terminal electronic payment system mainly consists of a card issuer management platform, an application provider management platform, and a mobile terminal. The system could have multiple application provider management platforms.

The mobile terminal has a smart card supporting electronic payment. In order to realize security management of the smart card and download and installation of payment application, the smart card needs to establish communications with the card issuer management platform and the application provider management platform, and connections between the smart card and the management platforms could be realized through the service terminals of the management platforms. The service terminals are equipped with a non-contact card reader or a card reader directly reading the smart card. Moreover, the service terminals can establish communications with the management platforms, so as to realize communications between the smart card and the management platforms.

The mobile terminal electronic payment system based on Near Field Communication technology supports multiple electronic payment applications, that is, multiple electronic payment applications can be installed on the smart card. In order to realize the security of payment applications, the smart card uses Global Platform Card Specification V2.1/V2.2 specification, and the smart card is separated into a number of independent security domains, so as to ensure isolation and independence between the multiple applications. Each application provider manages its own security domain, application, application data, and so on.

Following, based on the above mentioned system architecture, the key distribution system for the supplementary security domain key distribution through the service terminal is described in detail. It shall be explained that the key distribution system of the present invention is part of the mobile terminal electronic payment system based on Near Field Communication.

According to an embodiment of the present invention, a key distribution system is provided. Figure 1 is a block diagram of the key distribution system according to an embodiment of the present invention. As illustrated in Figure 1, the key distribution system comprises a card issuer management platform 10, an application provider management platform 12, an application provider service terminal 14, a smart card 16 (the smart card 16 is located within the mobile terminal, the smart card 16 includes issuer security domains and supplementary security domains), wherein the application provider needs to have a service terminal management system and the service terminal 14, and can provide services concerning electronic payment through the service terminal 14. The application provider management platform 12 and the card issuer management platform 10 are connected through dedicate line or Internet. The card issuer management platform 10 can establish communications with the smart card 16 through the application provider management platform 12 and the application provider service terminal 14. Moreover, the smart card 16 establishes connections with the application provider management platform 12 and the card issuer management platform 10 through the application provider service terminal 14. The key distribution system is explained in detail as follows.

The card issuer management platform 10 includes:
a creating module for creating a supplementary security domain corresponding to an application provider in the smart card 16; a first informing module for informing the supplementary security domain of generating in the smart card 16 a public/private key pair including a public key and a private key; a first receiving module for receiving the public key returned from the supplementary security domain; an importing module for importing a public key for trust point (the public key for trust point is provided by CA which issues the application provider certificate, and can be obtained from the application provider management platform, the public key is used in the supplementary security domain for authenticating the application provider certificate) for external authentication into the supplementary security domain; and a first transmitting module for transmitting the information of the supplementary security domain and the public key to the application provider management platform 12 after performing the importing step, wherein, with reference to the card issuer management platform illustrated in Figure 1, one or more of the first informing module, the first receiving module, the importing module, and the first transmitting module may be arranged in a subsystem of the card issuer management platform 10 according to practical application needs.

The application provider management platform 12 includes: a second receiving module for receiving the information of the supplementary security domain and the public key from the card issuer management platform 10; a selecting module for selecting the supplementary security domain of the smart card 16 by the service terminal 14 according to the information of the supplementary security domain and the public key; a second informing module for informing the supplementary security domain of regenerating a public key and a private key; a generating module for generating a supplementary security domain certificate according to the regenerated public key which is returned from the supplementary security domain; a second transmitting module for transmitting the supplementary security domain certificate to the supplementary security domain through a service terminal to achieve the supplementary security domain key distribution.

In addition, the application provider management platform 12 includes:
a judging module for judging, through the service terminal 14 of the application provider, whether there is a supplementary security domain corresponding to the application provider in the smart card 16; a calling module for calling the creating module to create a supplementary security domain on the smart card 16 through the card issuer management platform 10, in cases where the result of the judgement is that there is not a supplementary security domain corresponding to the application provider in the smart card 16; a recording module for recording in its database supplementary security domain information, after receiving the information of the supplementary security domain and the public key sent by the card issuer management platform 10; a secure channel establishing module for establishing a secure channel with the supplementary security domain, after selecting the supplementary security domain of the smart card 16 through the service terminal 14 according to the information of the supplementary security domain and the public key, wherein, with reference to the application provider management platform illustrated in Figure 1, one or more of the second receiving module, the selecting module, the second informing module, the generating module, and the second transmitting module may be arranged in a subsystem of the application provider management platform 12 according to practical application needs.

The service terminal 14 is used for establishing communications with the smart card 16 through a reading and writing device, and establishing a connection between the smart card 16 and the application provider management platform 12. In practical application, the service terminal 14 of the application provider can be either computer equipments at business locations of the application provider, or a terminal involved in processing of services such as electronic payment user information management, supplementary security domain creation, key update, electronic payment application download. In addition, the service terminal 14 can be connected to the application provider management platform 12 through a service terminal management system of the application provider, and the connection between the service terminal 14 and the application provider management platform 12 can be realized by line or Internet connection. Further, the service terminal 14 is equipped with a non-contact card reader or a reading and writing device reading the smart card directly, and the service terminal can establish communications with the smart card through the reading and writing device.

The smart card 16 is located in a mobile terminal and comprises a supplementary security domain, wherein the supplementary security domain is used to generate a public/private key pair, and return the public key to the card issuer management platform 10 through the service terminal 14, regenerate a public key and a private key, in cases where the application provider management platform 12 informs the supplementary security domain to do so, return the regenerated public key to the application provider management platform 12, and receive a supplementary security domain certificate sent by the application provider management platform 12.

Through the above processing, after the card issuer management platform 10 returns the basic information and the keys of the supplementary security domain to the application provider management platform 12, the keys are redistributed between the application provider management platform 12 and the supplementary security domain. Here, communications between the application provider management platform 12 and the smart card 16 are no longer transmitted by the card issuer management platform 10, but by the service terminal 14 of the application provider, which realizes isolation of the card issuer management platform 10, such that the card issuer management platform 10 cannot obtain the supplementary security domain key created by the application provider supplementary security domain on the smart card 16. Further, communications between the application provider management platform 12 and the smart card 16 are in a closed environment, so that potential security threats and attacks can be avoided in communication process. The present invention can achieve the security of the supplementary security domain key distribution of the application provider.

### Method embodiments

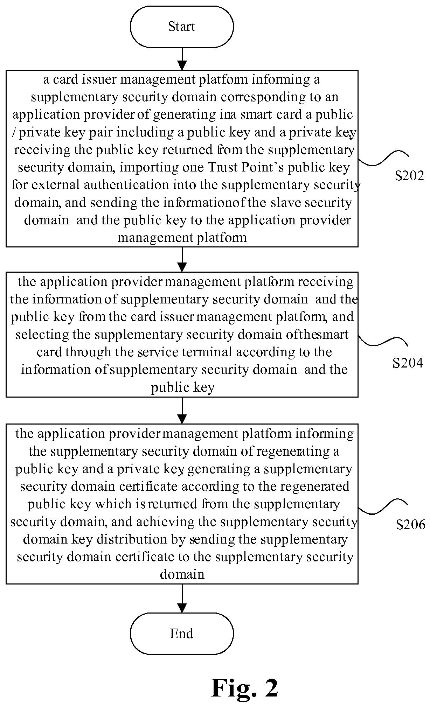

According to an embodiment of the present invention, a key distribution method is provided for key distribution to the supplementary security domains of the application provider. Figure 2 is a flowchart of the key distribution method according to an embodiment of the present invention. As shown in Figure 2, the following processing (step S202 --- step S206) are included:
Step S202, a card issuer management platform informs a supplementary security domain corresponding to an application provider of generating in a smart card a public/private key pair including a public key and a private key, receiving the public key returned from the supplementary security domain, importing one public key for trust point for external authentication into the supplementary security domain, and sending the information of the supplementary security domain and the public key to the application provider management platform,

In the above, in step S202, before electronic payment application of the application provider is downloaded to the smart card through the service terminal of the application provider, the application provider management platform judges, through the service terminal of the application provider, whether there is a supplementary security domain corresponding to the application provider in the smart card; if yes, there is a security domain corresponding to the application provider in the smart card, and the key distribution has been conducted in the security domain, and under this condition, security domain creation and key distribution are no longer needed, and the application provider management platform can download the electronic payment application to the existing supplementary security domain; if not, the application provider management platform creates, through the card issuer management platform, a supplementary security domain in the smart card, and informs the created supplementary security domain of generating a public/private key pair,

In the above, the particular processing of the application provider management platform creating a supplementary security domain in the smart card through the card issuer management platform is: the card issuer management platform communicates with the smart card through the application provider management platform, selects the issuer security domain of the smart card and establish a secure channel with the issuer security domain; the card issuer management platform informs, through the secure channel, the issuer security domain of establishing a supplementary security domain corresponding to the application provider; the issuer security domain creates a supplementary security domain in the smart card.
Step S204, the application provider management platform receiving the information of the supplementary security domain and the public key from the card issuer management platform, the application provider management platform establishing connections with the smart card through the service terminal of the application provider and selecting the supplementary security domain of the smart card through the service terminal according to the information of the supplementary security domain and the public key.

In the above, in Step S204, after the application provider management platform receives the information of the supplementary security domain and the public key sent by the card issuer management platform, the application provider management platform records in its database the information of the supplementary security domain.

In the above, further, in Step S204, after the application provider management platform performs selection of the supplementary security domain according to the information of the supplementary security domain and the public key, the method further comprises: the application provider management platform establishes a secure channel with the supplementary security domain.
Step S206, the application provider management platform informing the supplementary security domain of regenerating a public key and a private key, generating a supplementary security domain certificate according to the regenerated public key which is returned from the supplementary security domain, and achieving the supplementary security domain key distribution by sending the supplementary security domain certificate to the supplementary security domain,

In step S206, after the application provider management platform sends the supplementary security domain certificate to the supplementary security domain, the supplementary security domain needs to write the supplementary security domain certificate into the supplementary security domain.

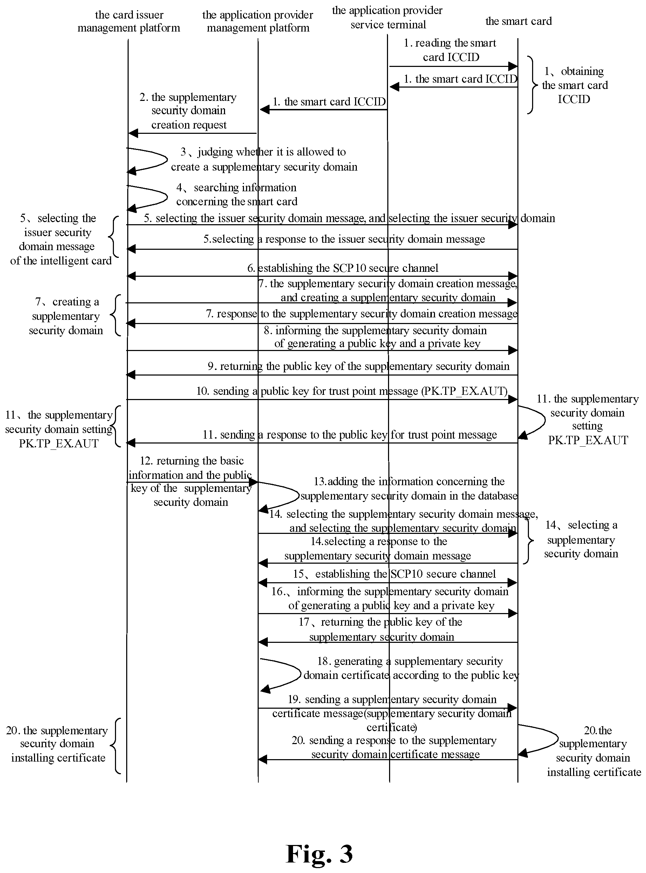

Following, the above technical solution of the present invention is described in detail in conjunction with embodiments. As illustrated in Figure 3, Figure 3 is a signaling flowchart of the specific processing procedure of the key distribution method according to an embodiment of the present invention. It shall be explained that, although the following description is based on the example of mobile terminal electronic payment system architecture illustrated in Figure 1, the application occasions of the present invention are not limited to the mobile terminal electronic payment system architecture illustrated in Figure 1.

In this embodiment, the service terminal of the application provider can be either computer equipments at business locations of the application provider, or a terminal involved in processing of services such as electronic payment user information management, supplementary security domain creation, key update, electronic payment application download. Moreover, the service terminal can be connected to the application provider management platform through a service terminal management system of the application provider, and the connection between the service terminal and the application provider management platform can be realized by line or Internet connections. Further, the service terminal is equipped with a non-contact card reader or a reading and writing device reading the smart card directly, and the service terminal can establish communications with the smart card through the reading and writing device.

In the embodiment, the application provider management platform is connected to the card issuer management platform through line or Internet, and the card issuer management platform can establish communications with the smart card through the application provider management platform and the application provider service terminal.

Moreover, the application and download of the electronic payment application service can be completed by the application provider service terminal. Before the electronic payment application is downloaded, it is required to check whether there is a supplementary security domain belonging to the application provider in the smart card, and the specific checking method is as follows:
1. reading feature information ICCID of the smart card through the service terminal, and then the application provider management platform searching in the database of the smart card, in which a supplementary security domain is created, of the system, whether a supplementary security domain of the application provider has been created in the smart card, according to ICCID;
2. when the supplementary security domains of the application provider in all the smart cards have the same ID, transmitting SELECT message to the smart cards, the object parameter in the message being the supplementary security domain ID, if it is indicated in the SELECT RESPONSE message returned by a smart card, that the corresponding supplementary security domain does not exist, judging that there is no supplementary security domain of the application provider in the smart card.

Moreover, if the supplementary security domain of the application provider does not exist, it is required to perform supplementary security domain creation and the supplementary security domain key distribution first.

Following, the creation process of the supplementary security domain of the application provider and the key distribution process are described in conjunction with Figure 3, the following processing includes:
1. the application provider service terminal reads identification information of the smart card, such as ICCID of the smart card, and then transmits the identification information of the smart card to the application provider management platform;
2. the application provider management platform transmits a supplementary security domain creation request to the card issuer management platform, the request message including the application provider ID (ASP_ID), the feature information ICCID of the smart card and so on;
3. after receiving the supplementary security domain creation request, the card issuer management platform checks the supplementary security domain creation request, and determining whether the request is allowed, specifically, the card issuer can determine whether a supplementary security domain is created through the application provider management platform, according to service authority of the application provider;
4. after confirming that a supplementary security domain can be created by the application provider management platform, the card issuer management platform searches information concerning the smart card, including ID (ISD_ID) of the issuer security domain of the smart card, in the database in the interior of the management platform, according to ICCID of the smart card;
5. the card issuer management platform sends SELECT message to the smart card through the application provider management platform to select the issuer security domain of the smart card;
6. the card issuer management platform and the issuer security domain of the smart card establishes SCP10 secure channel according to the requirements of Appendix F Secure Channel Protocol 10 of Global Platform Card Specification V2.2, to complete authentication of both sides and negotiation of session key;
7. the card issuer management platform sends a supplementary security domain creation message INSTALL [for Install] to the issuer security domain, the issuer security domain creating a supplementary security domain in accordance with the message, after the completing of the creation of the supplementary security domain, the issuer security domain sends an INSTALL Response to the card issuer management platform;
8. after confirming that a supplementary security domain has been created, the card issuer management platform informs the supplementary security domain of generating a public/private key pair (corresponding to Step S202 in Figure 2);
9. the supplementary security domain produces a public key and a private key by calling the interface for generating a key in the card, and then returns the public key to the card issuer management platform (corresponding to Step S202 in Figure 2);
10. the card issuer management platform sends One Public Key for Trust Point for External Authentication (PK.TP_EX.AUT) to the issuer security domain of the smart card by PUT KEY message (corresponding to Step S202 in Figure 2);
11. the issuer security domain of the smart card sends PK.TP_EX.AUT of the supplementary security domain to the supplementary security domain, the supplementary security domain sets PK.TP_EX.AUT and then sending PUT KEY RESPONSE to the card issuer management platform (corresponding to Step S202 in Figure 2);
12. the card issuer management platform sends the basic information of the created supplementary security domain and the public key of the supplementary security domain to the application provider management platform (corresponding to Step S202 in Figure 2);
13. the application provider management platform adds in the database information concerning the supplementary security domain;
14. the application provider management platform sends SELECT message to the smart card by the service terminal of the application provider management platform to select the created supplementary security domain (corresponding to Step S204 in Figure 2);
15. the application provider management platform and the supplementary security domain establishes SCP10 secure channel according to the requirements of Appendix F Secure Channel Protocol 10 of Global Platform Card Specification V2.2, to complete authentication of the application provider management platform performed by the supplementary security domain and negotiation of session key (corresponding to Step S204 in Figure 2);
16. the application provider management platform informs the supplementary security domain of generating a new public key and a new private key (corresponding to Step S206 in Figure 2);
17. the supplementary security domain reproduces a public key and a private key of the supplementary security domain by calling the interface for generating a key in the card, and then returning the public key to the application provider management platform (corresponding to Step S206 in Figure 2);
18. the application provider management platform sends the public key and certificate application information of the supplementary security domain to an application provider CA, CA issuing the certificate of the supplementary security domain (corresponding to Step S206 in Figure 2);
19. the application provider management platform sends the supplementary security domain certificate to the supplementary security domain through PUT KEY message (corresponding to Step S206 in Figure 2);
20. the supplementary security domain decrypting the message uses a session key, and installing the supplementary security domain certificate after obtaining it; the supplementary security domain sending PUT KEY Response to the application provider management platform.

After the above processing is performed, download and installation of electronic payment applications can be continued between the application provider management platform and the supplementary security domain.

Owing to the above mentioned, by means of the technical solution of the present invention, the supplementary security domain key distribution is performed through the service terminal of the application provider, which solves the problem of insecurity in the supplementary security domain key distribution in the related art caused by that the card issuer management platform can obtain the transmitted key data of the security domain when in charge of the transmission of the key data, can avoid other possible security threats and attack, and thereby, can enhance security in supplementary security domain key distribution of the application provider.

According to an embodiment of the present invention, a computer readable medium is provided on which computer executable instructions are stored, wherein when the instructions are executed by a computer or processor, the computer or processor is made to perform processing of Step S202 and Step S206 as shown in Figure 2, preferably, performing the above method embodiments.

In addition, the present invention is carried out without modifications on the system architecture and the current processing procedures, so the present invention is easy to carry out and promote in technical field, and has strong industrial applicability.

## Claims

1. A key distribution method, **characterized by** comprising:
a card issuer management platform (10) informing a supplementary security domain corresponding to an application provider of generating in a smart card a public/private key pair including a public key and a private key, the smart card being located in a mobile terminal, receiving the public key returned from the supplementary security domain, importing a Trust Point's public key for verifying certificates of off-card entities into the supplementary security domain, and transmitting information about the supplementary security domain and the public key to an application provider management platform (12);
the application provider management platform (12) receiving the information of the supplementary security domain and the public key from the card issuer management platform (10), and selecting the supplementary security domain of the smart card through a service terminal of the application provider according to the information about the supplementary security domain and the public key; and
the application provider management platform (12) informing, via the service terminal of the application provider, the supplementary security domain of regenerating a public key and a private key, generating a supplementary security domain certificate according to the regenerated public key which is returned, via the service terminal of the application provider, from the supplementary security domain, and achieving key distribution to the supplementary security domain by transmitting, via the service terminal of the application provider, the supplementary security domain certificate to the supplementary security domain.

2. The method according to Claim 1, **characterized in that** the processing of the card issuer management platform (10) informing the supplementary security domain of generating the public/private key pair comprises:
the application provider management platform (12) judging, through the service terminal of the application provider, whether the supplementary security domain corresponding to the application provider exists in the smart card;
if it is determined to be yes, the supplementary security domain of the application provider has existed in the smart card, then security domain creation and key distribution no longer being performed;
if no, the application provider management platform (12) creating, through the card issuer management platform (10), the supplementary security domain in the smart card, and informing the created supplementary security domain of generating the public/private key pair.

3. The method according to Claim 2, **characterized in that** the processing of the application provider management platform (12) creating the supplementary security domain in the smart card through the card issuer management platform (10) comprises:
the card issuer management platform (10) communicating with the smart card through the application provider management platform (12), selecting an issuer security domain of the smart card and establishing a secure channel with the issuer security domain;
the card issuer management platform (10) informing, through the secure channel, the issuer security domain of creating the supplementary security domain corresponding to the application provider;
the issuer security domain creating the supplementary security domain in the smart card.

4. The method according to Claim 1, **characterized in that** after the application provider management platform (12) receiving the information of the supplementary security domain and the public key sent by the card issuer management platform (10), the method further comprises: the application provider management platform (12) recording in its database the information of the supplementary security domain.

5. The method according to Claim 1, **characterized in that** after the application provider management platform (12) make a selection of the supplementary security domain according to the information of the supplementary security domain and the public key, the method further comprises:
the application provider management platform (12) establishing a secure channel with the supplementary security domain.

6. The method according to Claim 1, **characterized in that** after the application provider management platform (12) sends the supplementary security domain certificate to the supplementary security domain, the method further comprises:
the supplementary security domain writing the supplementary security domain certificate into the supplementary security domain.

7. A key distribution system, **characterized by** comprising:
a card issuer management platform (10) which comprises:
a creating module, configured to create a supplementary security domain corresponding to an application provider in a smart card;
a first informing module, configured to inform the supplementary security domain of generating in the smart card a public/private key pair including a public key and a private key;
a first receiving module, configured to receive the public key returned from the supplementary security domain;
an importing module, configured to import a Trust Point's public key for verifying certificates of off-card entities into the supplementary security domain;
a first transmitting module, configured to transmit information about the supplementary security domain and the public key to an application provider management platform (12) after performing the importing step;
the application provider management platform (12) which comprises:
a second receiving module, configured to receive the information of the supplementary security domain and the public key from the card issuer management platform (10);
a selecting module, configured to select the supplementary security domain of the smart card by a service terminal according to the information about the supplementary security domain and the public key;
a second informing module, configured to inform, via a service terminal of the application provider, the supplementary security domain of regenerating a public key and a private key;
a generating module, configured to generate a supplementary security domain certificate according to the regenerated public key which is returned, via the service terminal of the application provider, from the supplementary security domain;
a second transmitting module, configured to transmit, via the service terminal of the application provider, the supplementary security domain certificate to the supplementary security domain through a service terminal to achieve the supplementary security domain key distribution;
the service terminal, configured to establish communications with the smart card through a reading and writing device, and to establish a connection between the smart card and the application provider management platform (12);
the smart card, located in a mobile terminal, and comprising the supplementary security domain, wherein the supplementary security domain, configured to generate a public/private key pair, and to return the public key to the card issuer management platform (10) through the service terminal, to regenerate a public key and a private key in the case that the application provider management platform (12) informing the supplementary security domain of regenerating a public key and a private key, to return the regenerated public key to the application provider management platform (12), and to receive the supplementary security domain certificate sent by the application provider management platform (12).

8. The system according to Claim 7, **characterized in that** the application provider management platform (12) further comprises:
a judging module, configured to judge, through the service terminal of the application provider, whether the supplementary security domain corresponding to the application provider exists in the smart card;
a calling module, configured to call the creating module to create the supplementary security domain in the smart card through the card issuer management platform (10) if the judging module judges that the supplementary security domain corresponding to the application provider does not exist in the smart card.

9. The system according to Claim 7, **characterized in that** the application provider management platform (12) further comprises:
a recording module, configured to record in its database the information of the supplementary security domain after receiving the information of the supplementary security domain and the public key sent by the card issuer management platform (10).

10. The system according to Claim 7, **characterized in that** the application provider management platform (12) further comprises:
a secure channel establishing module, configured to establish a secure channel with the supplementary security domain after selecting the supplementary security domain of the smart card through the service terminal according to the information of the supplementary security domain and the public key.

## Patentansprüche

1. Schlüsselverteilungsverfahren, **dadurch gekennzeichnet, dass** es umfasst, dass:
eine Kartenemissionsmanagementplattform (10), die eine Ergänzungssicherheitsdomäne, die einem Anwendungsanbieter entspricht, darüber informiert, dass in einer Smartcard ein öffentlich/privates Schlüsselpaar generiert wird, das einen öffentlichen Schlüssel und einen privaten Schlüssel umfasst, wobei sich die Smartcard in einem mobilen Endgerät befindet, den öffentlichen Schlüssel, der von der Ergänzungssicherheitsdomäne zurückgesendet wird, empfängt, den öffentlichen Schlüssel eines Vertrauenspunktes (Trust Point) zum Verifizieren von Zertifikaten kartenexterner Entitäten in die Ergänzungssicherheitsdomäne importiert und Informationen über die Ergänzungssicherheitsdomäne und den öffentlichen Schlüssel an eine Anwendungsanbieter-Managementplattform (12) sendet;
die Anwendungsanbieter-Managementplattform (12) die Informationen der Ergänzungssicherheitsdomäne und des öffentlichen Schlüssels von der Kartenemissionsmanagementplattform (10) empfängt und die Ergänzungssicherheitsdomäne der Smartcard durch einen Service-Terminal des Anwendungsanbieters gemäß den Informationen über die Ergänzungssicherheitsdomäne und den öffentlichen Schlüssel auswählt; und
die Anwendungsanbieter-Managementplattform (12), über den Service-Terminal des Anwendungsanbieters, die Ergänzungssicherheitsdomäne über das erneute Generieren eines öffentlichen Schlüssels und eines privaten Schlüssels informiert, ein Ergänzungssicherheitsdomänenzertifikat gemäß dem neu generierten öffentlichen Schlüssel, der über den Service-Terminal des Anwendungsanbieters von der Ergänzungssicherheitsdomäne zurückgesendet wird, generiert und eine Schlüsselverteilung zu der Ergänzungssicherheitsdomäne ausführt, indem, über den Service-Terminal des Anwendungsanbieters, das Ergänzungssicherheitsdomänenzertifikat zu der Ergänzungssicherheitsdomäne gesendet wird.

2. Verfahren nach Anspruch 1, **dadurch gekennzeichnet, dass** die Verarbeitung der Kartenemissionsmanagementplattform (10), welche die Ergänzungssicherheitsdomäne über das Generieren des öffentlich/privaten Schlüsselpaares informiert, umfasst, dass:
die Anwendungsanbieter-Managementplattform (12), durch den Service-Terminal des Anwendungsanbieters, beurteilt, ob die Ergänzungssicherheitsdomäne, die dem Anwendungsanbieter entspricht, in der Smartcard existiert;
wenn die Bestimmung "Ja" lautet, die Ergänzungssicherheitsdomäne des Anwendungsanbieters in der Smartcard hat existiert, dann werden die Erzeugung der Sicherheitsdomäne und die Schlüsselverteilung nicht länger ausgeführt;
im Fall von "Nein" die Anwendungsanbieter-Managementplattform (12), durch die Kartenemissionsmanagementplattform (10), die Ergänzungssicherheitsdomäne in der Smartcard erzeugt und die erzeugte Ergänzungssicherheitsdomäne über das Generieren des öffentlich/privaten Schlüsselpaares informiert.

3. Verfahren nach Anspruch 2, **dadurch gekennzeichnet, dass** die Verarbeitung der Anwendungsanbieter-Managementplattform (12), welche die Ergänzungssicherheitsdomäne in der Smartcard durch die Kartenemissionsmanagementplattform (10) erzeugt, umfasst, dass:
die Kartenemissionsmanagementplattform (10) durch die Anwendungsanbieter-Managementplattform (12) mit der Smartcard kommuniziert, eine Emittentensicherheitsdomäne der Smartcard auswählt und einen sicheren Kanal mit der Emittentensicherheitsdomäne herstellt;
die Kartenemissionsmanagementplattform (10) die Emittentensicherheitsdomäne durch den sicheren Kanal über das Erzeugen der Ergänzungssicherheitsdomäne, die dem Anwendungsanbieter entspricht, informiert; und
die Emittentensicherheitsdomäne die Ergänzungssicherheitsdomäne in der Smartcard erzeugt.

4. Verfahren nach Anspruch 1, **dadurch gekennzeichnet, dass**, nachdem die Anwendungsanbieter-Managementplattform (12) die durch die Kartenemissionsmanagementplattform (10) gesendeten Informationen der Ergänzungssicherheitsdomäne und des öffentlichen Schlüssels empfangen hat, das Verfahren des Weiteren umfasst, dass die Anwendungsanbieter-Managementplattform (12) in ihrer Datenbank die Informationen der Ergänzungssicherheitsdomäne empfängt.

5. Verfahren nach Anspruch 1, **dadurch gekennzeichnet, dass**, nachdem die Anwendungsanbieter-Managementplattform (12) eine Auswahl der Ergänzungssicherheitsdomäne gemäß den Informationen der Ergänzungssicherheitsdomäne und des öffentlichen Schlüssels vorgenommen hat, das Verfahren des Weiteren umfasst, dass die Anwendungsanbieter-Managementplattform (12) einen sicheren Kanal mit der Ergänzungssicherheitsdomäne herstellt.

6. Verfahren nach Anspruch 1, **dadurch gekennzeichnet, dass**, nachdem die Anwendungsanbieter-Managementplattform (12) das Ergänzungssicherheitsdomänenzertifikat an die Ergänzungssicherheitsdomäne gesendet hat, das Verfahren des Weiteren umfasst, dass die Ergänzungssicherheitsdomäne das Ergänzungssicherheitsdomänenzertifikat in die Ergänzungssicherheitsdomäne schreibt.

7. Schlüsselverteilungssystem, **dadurch gekennzeichnet, dass** es Folgendes umfasst:
eine Kartenemissionsmanagementplattform (10), die Folgendes umfasst:
ein Erzeugungsmodul, das dafür ausgebildet ist, eine Ergänzungssicherheitsdomäne, die einem Anwendungsanbieter entspricht, in einer Smartcard zu erzeugen;
ein erstes Informationsmodul, das dafür ausgebildet ist, die Ergänzungssicherheitsdomäne darüber zu informieren, dass in der Smartcard ein öffentlich/privates Schlüsselpaar generiert wird, das einen öffentlichen Schlüssel und einen privaten Schlüssel umfasst;
ein erstes Empfangsmodul, das dafür ausgebildet ist, den öffentlichen Schlüssel zu empfangen, der von der Ergänzungssicherheitsdomäne zurückgesendet wird;
ein Importmodul, das dafür ausgebildet ist, den öffentlichen Schlüssel eines Vertrauenspunktes (Trust Point) zum Verifizieren von Zertifikaten kartenexterner Entitäten in die Ergänzungssicherheitsdomäne zu importieren;
ein erstes Sendemodul, das dafür ausgebildet ist, nach dem Ausführen des Importierschrittes Informationen über die Ergänzungssicherheitsdomäne und den öffentlichen Schlüssel an eine Anwendungsanbieter-Managementplattform (12) zu senden;
die Anwendungsanbieter-Managementplattform (12), die Folgendes umfasst:
ein zweites Empfangsmodul, das dafür ausgebildet ist, die Informationen der Ergänzungssicherheitsdomäne und des öffentlichen Schlüssels von der Kartenemissionsmanagementplattform (10) zu empfangen;
ein Auswahlmodul, das dafür ausgebildet ist, die Ergänzungssicherheitsdomäne der Smartcard durch einen Service-Terminal gemäß den Informationen über die Ergänzungssicherheitsdomäne und den öffentlichen Schlüssel auszuwählen;
ein zweites Informationsmodul, das dafür ausgebildet ist, die Ergänzungssicherheitsdomäne, über einen Service-Terminal des Anwendungsanbieter, über das erneute Generieren eines öffentlichen Schlüssels und eines privaten Schlüssels zu informieren;
ein Generierungsmodul, das dafür ausgebildet ist, ein Ergänzungssicherheitsdomänenzertifikat gemäß dem neu generierten öffentlichen Schlüssel, der über den Service-Terminal des Anwendungsanbieters von der Ergänzungssicherheitsdomäne zurückgesendet wird, zu generieren;
ein zweites Sendemodul, das dafür ausgebildet ist, über den Service-Terminal des Anwendungsanbieters das Ergänzungssicherheitsdomänenzertifikat an die Ergänzungssicherheitsdomäne durch einen Service-Terminal zu senden, um die Schlüsselverteilung der Ergänzungssicherheitsdomäne auszuführen;
den Service-Terminal, der dafür ausgebildet ist, eine Kommunikation mit der Smartcard durch eine Lese- und Schreibvorrichtung aufzubauen und eine Verbindung zwischen der Smartcard und der Anwendungsanbieter-Managementplattform (12) herzustellen;
wobei sich die Smartcard in einem mobilen Endgerät befindet und die Ergänzungssicherheitsdomäne umfasst, wobei die Ergänzungssicherheitsdomäne dafür ausgebildet ist, ein öffentlich/privates Schlüsselpaar zu generieren und den öffentlichen Schlüssel an die Kartenemissionsmanagementplattform (10) durch den Service-Terminal zurückzusenden, einen öffentlichen Schlüssel und einen privaten Schlüssel neu zu generieren, falls die Anwendungsanbieter-Managementplattform (12) die Ergänzungssicherheitsdomäne über das erneute Generieren eines öffentlichen Schlüssel und eines privaten Schlüssels informiert, den neu generierten öffentlichen Schlüssel an die Anwendungsanbieter-Managementplattform (12) zurückzusenden, und das durch die Anwendungsanbieter-Managementplattform (12) gesendete Ergänzungssicherheitsdomänenzertifikat zu empfangen.

8. System nach Anspruch 7, **dadurch gekennzeichnet, dass** die Anwendungsanbieter-Managementplattform (12) des Weiteren Folgendes umfasst:
ein Beurteilungsmodul, das dafür ausgebildet ist, durch den Service-Terminal des Anwendungsanbieters zu beurteilen, ob die Ergänzungssicherheitsdomäne, die dem Anwendungsanbieter entspricht, in der Smartcard existiert;
ein Aufforderungsmodul, das dafür ausgebildet ist, das Erzeugungsmodul aufzufordern, die Ergänzungssicherheitsdomäne in der Smartcard durch die Kartenemissionsmanagementplattform (10) zu erzeugen, wenn das Beurteilungsmodul urteilt, dass die Ergänzungssicherheitsdomäne, die dem Anwendungsanbieter entspricht, nicht in der Smartcard existiert.

9. System nach Anspruch 7, **dadurch gekennzeichnet, dass** die Anwendungsanbieter-Managementplattform (12) des Weiteren Folgendes umfasst:
ein Aufzeichnungsmodul, das dafür ausgebildet ist, in seiner Datenbank die Informationen der Ergänzungssicherheitsdomäne aufzuzeichnen, nachdem die durch die Kartenemissionsmanagementplattform (10) gesendeten Informationen der Ergänzungssicherheitsdomäne und des öffentlichen Schlüssels empfangen wurden.

10. System nach Anspruch 7, **dadurch gekennzeichnet, dass** die Anwendungsanbieter-Managementplattform (12) des Weiteren Folgendes umfasst:
ein Sicherer-Kanal-Herstellungsmodul, das dafür ausgebildet ist, einen sicheren Kanal mit der Ergänzungssicherheitsdomäne herzustellen, nachdem die Ergänzungssicherheitsdomäne der Smartcard durch den Service-Terminal gemäß den Informationen der Ergänzungssicherheitsdomäne und des öffentlichen Schlüssels ausgewählt wurde.

## Revendications

1. Un procédé de distribution de clés, **caractérisé en ce qu'**il comprend :
le signalement par une plateforme de gestion d'émetteur de cartes (10) à un domaine de sécurité supplémentaire correspondant à un fournisseur d'applications de la génération dans une carte à puce intelligente d'une paire clé publique/clé privée comprenant une clé publique et une clé privée, la carte à puce intelligente étant logée dans un terminal mobile, la réception de la clé publique renvoyée à partir du domaine de sécurité supplémentaire, l'importation d'une clé publique de point de confiance destinée à la vérification de certificats d'entités hors carte vers le domaine de sécurité supplémentaire et la transmission d'informations relatives au domaine de sécurité supplémentaire et à la clé publique à une plateforme de gestion de fournisseur d'applications (12),
la réception par la plateforme de gestion de fournisseur d'applications (12) des informations du domaine de sécurité supplémentaire et de la clé publique à partir de la plateforme de gestion d'émetteur de cartes (10) et la sélection du domaine de sécurité supplémentaire de la carte à puce intelligente par l'intermédiaire d'un terminal de service du fournisseur d'applications en fonction des informations relatives au domaine de sécurité supplémentaire et à la clé publique, et
le signalement par la plateforme de gestion de fournisseur d'applications (12), par l'intermédiaire du terminal de service du fournisseur d'applications, au domaine de sécurité supplémentaire de la regénération d'une clé publique et d'une clé privée, la génération d'un certificat de domaine de sécurité supplémentaire en fonction de la clé publique regénérée qui est retournée, par l'intermédiaire du terminal de service du fournisseur d'applications, à partir du domaine de sécurité supplémentaire, et la réalisation d'une distribution de clés au domaine de sécurité supplémentaire par la transmission, par l'intermédiaire du terminal de service du fournisseur d'applications, du certificat de domaine de sécurité supplémentaire au domaine de sécurité supplémentaire.

2. Le procédé selon la revendication 1, **caractérisé en ce que** le traitement du signalement par la plateforme de gestion d'émetteur de cartes (10) au domaine de sécurité supplémentaire de la génération de la paire clé publique/clé privée comprend :
la détermination par la plateforme de gestion de fournisseur d'applications (12), par l'intermédiaire du terminal de service du fournisseur d'applications, si le domaine de sécurité supplémentaire correspondant au fournisseur d'applications existe dans la carte à puce intelligente,
s'il est déterminé que c'est le cas, le domaine de sécurité supplémentaire du fournisseur d'applications a existé dans la carte à puce intelligente, alors la création d'un domaine de sécurité et la distribution de clés ne sont pas réalisées,
si ce n'est pas le cas, la création par la plateforme de gestion de fournisseur d'applications (12), par l'intermédiaire de la plateforme de gestion d'émetteur de cartes (10), du domaine de sécurité supplémentaire dans la carte à puce intelligente, et le signalement au domaine de sécurité supplémentaire créé de la génération de la paire clé publique/clé privée.

3. Le procédé selon la revendication 2, **caractérisé en ce que** le traitement de la création par la plateforme de gestion de fournisseur d'applications (12) du domaine de sécurité supplémentaire dans la carte à puce intelligente par l'intermédiaire de la plateforme de gestion d'émetteur de cartes (10) comprend :
la communication de la plateforme de gestion d'émetteur de cartes (10) avec la carte à puce intelligente par l'intermédiaire de la plateforme de gestion de fournisseur d'applications (12), la sélection d'un émetteur domaine de sécurité de la carte à puce intelligente et l'établissement d'un canal sécurisé avec le domaine de sécurité de l'émetteur,
le signalement par la plateforme de gestion d'émetteur de cartes (10), par l'intermédiaire du canal sécurisé, au domaine de sécurité de l'émetteur de la création du domaine de sécurité supplémentaire correspondant au fournisseur d'applications,
la création par le domaine de sécurité de l'émetteur du domaine de sécurité supplémentaire dans la carte à puce intelligente.

4. Le procédé selon la revendication 1, **caractérisé en ce que**, après la réception par le fournisseur d'applications plateforme de gestion (12) des informations du domaine de sécurité supplémentaire et de la clé publique envoyées par la plateforme de gestion d'émetteur de cartes (10), le procédé comprend en outre : l'enregistrement par la plateforme de gestion de fournisseur d'applications (12) dans sa base de données des informations du domaine de sécurité supplémentaire.

5. Le procédé selon la revendication 1, **caractérisé en ce que**, après la réalisation par la plateforme de gestion de fournisseur d'applications (12) d'une sélection du domaine de sécurité supplémentaire en fonction des informations du domaine de sécurité supplémentaire et de la clé publique, le procédé comprend en outre :
l'établissement par la plateforme de gestion de fournisseur d'applications (12) d'un canal sécurisé avec le domaine de sécurité supplémentaire.

6. Le procédé selon la revendication 1, **caractérisé en ce que**, après l'envoi par la plateforme de gestion de fournisseur d'applications (12) du certificat de domaine de sécurité supplémentaire au domaine de sécurité supplémentaire, le procédé comprend en outre :
l'écriture par le domaine de sécurité supplémentaire du certificat de domaine de sécurité supplémentaire dans le domaine de sécurité supplémentaire.

7. Un système de distribution de clés, **caractérisé en ce qu'**il comprend :
une plateforme de gestion d'émetteur de cartes (10) qui comprend :
un module de création, configuré de façon à créer un domaine de sécurité supplémentaire correspondant à un fournisseur d'applications dans une carte à puce intelligente,
un premier module de signalement, configuré de façon à signaler au domaine de sécurité supplémentaire la génération dans la carte à puce intelligente d'une paire clé publique/clé privée comprenant une clé publique et une clé privée,
un premier module de réception, configuré de façon à recevoir la clé publique renvoyée à partir du domaine de sécurité supplémentaire,
un module d'importation, configuré de façon à importer une clé publique de point de confiance destinée à la vérification de certificats d'entités hors carte dans le domaine de sécurité supplémentaire,
un premier module de transmission, configuré de façon à transmettre des informations relatives au domaine de sécurité supplémentaire et à la clé publique à une plateforme de gestion de fournisseur d'applications (12) après l'exécution de l'étape d'importation,
la plateforme de gestion de fournisseur d'applications (12) comprenant :
un deuxième module de réception, configuré de façon à recevoir les informations du domaine de sécurité supplémentaire et de la clé publique à partir de la plateforme de gestion d'émetteur de cartes (10),
un module de sélection, configuré de façon à sélectionner le domaine de sécurité supplémentaire de la carte à puce intelligente par un terminal de service en fonction des informations relatives au domaine de sécurité supplémentaire et à la clé publique,
un deuxième module de signalement, configuré de façon à signaler, par l'intermédiaire d'un terminal de service du fournisseur d'applications, au domaine de sécurité supplémentaire la regénération d'une clé publique et d'une clé privée,
un module de génération, configuré de façon à générer un certificat de domaine de sécurité supplémentaire en fonction de la clé publique regénérée qui est retournée, par l'intermédiaire du terminal de service du fournisseur d'applications, à partir du domaine de sécurité supplémentaire,
un deuxième module de transmission, configuré de façon à transmettre, par l'intermédiaire du terminal de service du fournisseur d'applications, le certificat de domaine de sécurité supplémentaire au domaine de sécurité supplémentaire par l'intermédiaire d'un terminal de service de façon à réaliser la distribution de clés de domaine de sécurité supplémentaire,
le terminal de service étant configuré de façon à établir des communications avec la carte à puce intelligente par l'intermédiaire d'un dispositif de lecture et d'écriture et à établir une connexion entre la carte à puce intelligente et la plateforme de gestion de fournisseur d'applications (12),
la carte à puce intelligente, logée dans un terminal mobile, et comprenant le domaine de sécurité supplémentaire, le domaine de sécurité supplémentaire étant configuré de façon à générer une paire clé publique/clé privée et à renvoyer la clé publique à la plateforme de gestion d'émetteur de cartes (10) par l'intermédiaire du terminal de service, à regénérer une clé publique et une clé privée dans le cas où la plateforme de gestion de fournisseur d'applications (12) signale au domaine de sécurité supplémentaire la regénération d'une clé publique et d'une clé privée, à renvoyer la clé publique regénérée à la plateforme de gestion de fournisseur d'applications (12) et à recevoir le certificat de domaine de sécurité supplémentaire envoyé par la plateforme de gestion de fournisseur d'applications (12).

8. Le système selon la revendication 7, **caractérisé en ce que** la plateforme de gestion de fournisseur d'applications (12) comprend en outre :
un module de détermination, configuré de façon à déterminer, par l'intermédiaire du terminal de service du fournisseur d'applications, si le domaine de sécurité supplémentaire correspondant au fournisseur d'applications existe dans la carte à puce intelligente,
un module d'appel, configuré de façon à appeler le module de création de façon à créer le domaine de sécurité supplémentaire dans la carte à puce intelligente par l'intermédiaire de la plateforme de gestion d'émetteur de cartes (10) si le module de détermination détermine que le domaine de sécurité supplémentaire correspondant au fournisseur d'applications n'existe pas dans la carte à puce intelligente.

9. Le système selon la revendication 7, **caractérisé en ce que** la plateforme de gestion de fournisseur d'applications (12) comprend en outre :
un module d'enregistrement, configuré de façon à enregistrer dans sa base de données les informations du domaine de sécurité supplémentaire après la réception des informations du domaine de sécurité supplémentaire et de la clé publique envoyées par la plateforme de gestion d'émetteur de cartes (10).

10. Le système selon la revendication 7, **caractérisé en ce que** la plateforme de gestion de fournisseur d'applications (12) comprend en outre :
un module d'établissement de canal sécurisé, configuré de façon à établir un canal sécurisé avec le domaine de sécurité supplémentaire après la sélection du domaine de sécurité supplémentaire de la carte à puce intelligente par l'intermédiaire du terminal de service en fonction des informations du domaine de sécurité supplémentaire et de la clé publique.
